# EUROPEAN PATENT APPLICATION

(11) **EP 4 465 441 A1**
(43) Date of publication of application: **20.11.2024**
(21) Application number: 23740497.5
(22) Date of filing: 13.01.2023
(51) Int. Cl.: H01Q 1/12, H01Q 1/08

(54) **ANTENNA DEVICE**

(30) Priority: 13.01.2022 KR 20220005485
(71) Applicant: KMW Inc., Hwaseong-si, Gyeonggi-do 18462 (KR)
(72) Inventor: SHIM, Joon Hyong, Yongin-si, Gyeonggi-do 16855 (KR); KIM, In Ho, Yongin-si, Gyeonggi-do 17095 (KR); LEE, Joo Hoon, Anyang-si, Gyeonggi-do 14102 (KR); YOO, Young Seob, Incheon 21982 (KR); KIM, Kap Youl, Suwon-si, Gyeonggi-do 16685 (KR); KIM, Min Soo, Hwaseong-si, Gyeonggi-do 18454 (KR); PARK, Dae Myung, Hwaseong-si, Gyeonggi-do 18443 (KR); HONG, Young Ji, Hwaseong-si Gyeonggi-do 18470 (KR); KIM, Hee, Osan-si, Gyeonggi-do 18131 (KR); KWAK, Chul Soo, Anyang-si, Gyeonggi-do 14044 (KR); KIM, Kyeong Hwan, Hwaseong-si, Gyeonggi-do 18504 (KR)
(74) Representative: SJW Patentanwälte
(86) International application number: PCT/KR2023/000650
(87) International publication number: WO 2023/136654

(57) **Abstract**

Provided is an antenna apparatus in which antenna internal components related to a power cable and a signal cable connected to the outside of a conventional antenna are installed separately from the antenna, thus cooling efficiency is improved, the signal cable and the power cable can be neatly arranged on a support pole, and when the components related to the signal cable and the power cable are repaired, repairs can be easily carried out without separating the antenna. To this end, the antenna apparatus according to the present invention comprises: an antenna; an rotation tilt system for installing the antenna so as to be spaced apart, in the forward direction, from the support pole by a predetermined distance; and a photoelectric composite unit which is disposed on the rotation tilt system, transmits and receives signals to/from the antenna, and supplies power.

## Description

### [Technical Field]

The present disclosure relates to an antenna apparatus, and more particularly, to an antenna apparatus including an optical signal unit and a power supply unit.

### [Background Art]

In general, a wireless communication technology, for example, a multiple input multiple output (MIMO) technology, is a technology for significantly increasing a data transmission capacity by using multiple antennas, and is a spatial multiplexing scheme in which a transmitter transmits different data through transmission antennas and a receiver distinguishes between transmission data through proper signal processing.

Accordingly, as both the number of transmission antennas and the number of reception antennas are increased, more data can be transmitted because a channel capacity is increased. For example, if the number of antennas is increased to 10, a channel capacity that is about 10 times that of a single antenna system is secured by using the same frequency band.

In 4G LTE-advanced, up to 8 antennas are used. In a current 5G stage, base station equipment having 64 or 128 antennas or more is used, which is called a massive MIMO technology. A current cell operation is 2-dimensional, whereas the massive MIMO technology is called full dimension (FD) MIMO because 3D-beamforming is possible.

In the massive MIMO technology, as the number of antennas (ANTs) is increased, the numbers of transmitters and filters according to the increased number of antennas are also increased. Nevertheless, it is practical that RF parts (antenna/filter/power amplifier/transceiver etc.) are manufactured to be small, lightweight, and cheap due to a lease cost or spatial constraints of an installation place. Massive MIMO requires a high output for coverage extension. Power consumption and the amount of heat generated attributable to such a high output act as negative factors in reducing the weight and the size.

In particular, when a MIMO antenna in which modules having RF elements and digital elements implemented therein have been coupled as a stack structure is installed in a limited space, in order to maximize the ease of installation or space utilization, there emerges the necessity of a compactness and miniaturization design for a plurality of layers that constitute the MIMO antenna. A necessity relating to the free adjustment of the direction of an antenna apparatus that is installed in one support pole is strongly required.

In accordance with the requirements, Korean Patent No. 10-2095871 (April 2, 2020) (hereinafter referred to as a "conventional technology") discloses a "clamping apparatus for an antenna" including a tilting unit for rotating an antenna apparatus in up and down directions and a rotation unit for rotating the antenna apparatus in left and right directions.

However, in an antenna apparatus such as the conventional technology, for an efficient installation and operation of the antenna apparatus, an antenna and a remote radio head (RRH) that have been divided from the antenna apparatus are collectively called an integrated radio unit since several years ago. Various modules, such as an antenna, a power supply apparatus, an optical communication module, and a filter, are miniaturized into one body. The one body is installed in a pole, a wall surface, etc. by using a clamping apparatus for fixing.

However, the conventional antenna apparatus has problems in that on-site repair and replacement is impossible when a problem occurs in one module and all of various modules have to be replaced because the various modules are formed into one body. Such a problem lies in that all of cables related to all components that are included in an integrated radio unit are connected as one body.

Furthermore, the conventional antenna apparatus is installed with a marginal length of a cable so that the antenna apparatus can be moved within an allowable range because the direction of the antenna apparatus is changed for each antenna for smooth radio equipment. In this case, the conventional antenna apparatus has a form in which the conventional antenna apparatus is not environmentally friendly due to a twisted shape of the cable.

The existing integrated radio unit method has advantages of the minimization of an installation space and time, and the removal of a loss attributable to the removal of a cable between the RRH and the antenna because the existing integrated radio unit method can provide a service only if only one body is installed, but has some problems.

For example, the existing integrated body construction has problems of a maintenance difficulty and an excessive cost because an on-site module unit repair cannot be handled.

Furthermore, in the conventional antenna apparatus, various modules, such as signal units, including an optical communication module and a filter, and a power supply unit, are included in one antenna housing within the antenna apparatus. Accordingly, cooling efficiency of the antenna apparatus is not good due to the generation of heat from the signal units and the power supply unit. Furthermore, when the antenna apparatus is in the state in which the antenna apparatus has been installed in a support pole through a tilting unit and a rotation unit, there is a problem in that an external appearance of the antenna apparatus is not good because a signal cable and a power cable connected to the antenna apparatus are disposed in a form in which the signal cable and the power cable have hung down or due to a twisted form of the signal cable and the power cable, because the antenna apparatus is disposed to excessively protrude in the radial direction of the support pole.

Furthermore, the conventional technology also has a problem in that maintenance is not easy because the signal unit and the power supply unit are disposed within one antenna housing and thus the antenna apparatus has to be separated upon maintenance of a component related to a signal and power supply.

### [DISCLOSURE]

### [Technical Problem]

An object of the present disclosure is to obtain a reduced maintenance difficulty and a cost reduction by repairing, replacing, and managing only a corresponding module, if necessary, because a module that is most in need of maintenance is disposed outside a body.

Furthermore, an environment-friendly installation form can be additionally obtained because a form of cables that have been complicatedly twisted is hidden by disposing an external arrangement module at the location of a clamp apparatus for installation and connecting the cables that come from the ground through a module.

Furthermore, a size and weight reduction effect of an integrated radio unit itself can be obtained by separating some modules, which leads to a load reduction effect of a clamp apparatus for installation. Accordingly, a durability increase effect is additionally obtained because tolerance to an external force, such as an earthquake, vibration, or a wind load, is increased.

Specifically, an object of the present disclosure is to provide an antenna apparatus, which can improve cooling efficiency and enables a signal cable and a power cable to be tidily organized in a support pole by installing internal components of a conventional antenna, which are related to the signal cable and the power cable connected to the outside of the antenna, separately from the antenna, and enables components related to the signal cable and the power cable to be easily maintained even without separating the antenna when the components are maintained.

Technical objects of the present disclosure are not limited to the aforementioned objects, and the other objects not described above may be evidently understood from the following description by those skilled in the art.

### [Technical Solution]

In order to achieve the objects, an antenna apparatus according to an embodiment of the present disclosure includes an antenna, an antenna installation unit, and a photoelectric composite unit. The antenna installation unit installs the antenna in a support pole so that the antenna is disposed to be spaced apart from the support pole forward by a predetermined distance. The photoelectric composite unit is disposed in the antenna installation unit. The photoelectric composite unit transmits and receives signals to and from the antenna and supplies power to the antenna.

A first connector may be provided on a front surface of the antenna installation unit. The first connector may include a first signal terminal and a first power terminal that are connected to the photoelectric composite unit. A second connector may be provided on a rear surface of the antenna. The second connector may include a second signal terminal that is connected to the first signal terminal and a second power terminal that is connected to the first power terminal.

A first terminal plate and a gasket may be formed on a front surface of the first connector. The first terminal plate may include the first signal terminal and the first power terminal. The gasket may surround the first terminal plate. A second terminal plate and a gasket insertion groove may be formed on a rear surface of the second connector. The second terminal plate may include the second signal terminal and the second power terminal. The gasket insertion groove may surround the second terminal plate. The gasket may be inserted into the gasket insertion groove.

A first alignment guide protrusion may be further provided in any one terminal plate of the first terminal plate and the second terminal. A first alignment guide groove into which the first alignment guide protrusion is inserted may be further provided in the other terminal plate of the first terminal plate and the second terminal plate.

Any one terminal plate of the first terminal plate and the second terminal plate may be movable in forward and backward directions. An alignment cushion that provides an elastic force in the forward and backward directions may be further installed in the any one terminal plate.

The alignment cushion may include a cushion plate and a plurality of cushion protrusions. One side of the cushion plate may be disposed to come into contact with one side of the any one terminal plate. The plurality of cushion protrusions may be formed in the other side of the cushion plate.

The antenna installation unit may rotate the antenna in a horizontal direction and a vertical direction. The photoelectric composite unit may supply power to the antenna installation unit.

The antenna installation unit may include a support pole fixing clamp, an antenna fixing bracket, and an actuator. The support pole fixing clamp may be fixed to the support pole. The antenna fixing bracket may be fixed to the rear surface of the antenna. The actuator may be coupled to the support pole fixing clamp so that the actuator is rotatable in the horizontal direction, and may be rotatable in the horizontal direction with respect to the support pole fixing clamp. The antenna fixing bracket may be coupled to the actuator rotatably in the vertical direction, so the actuator may rotate the antenna fixing bracket in the vertical direction. The first connector may be provided on a front surface of the antenna fixing bracket.

The photoelectric composite unit may be provided under the actuator.

The antenna fixing bracket may include an antenna fixing plate and a pair of actuator coupling plates. The first connector may be provided on a front surface of the antenna fixing plate. The pair of actuator coupling plates may be formed on a rear surface of the antenna fixing plate so that the pair of actuator coupling plates protrudes backward. The pair of actuator coupling plates may be coupled to both sides of the actuator, respectively, rotatably in the vertical direction.

An antenna coupling member may be installed on the rear surface of the antenna. A snap protrusion may be formed in the antenna coupling member. The snap protrusion may be inserted, snapped, and coupled to a snap groove formed in the antenna fixing plate.

The antenna coupling member may include a pair of antenna coupling members disposed to be spaced apart from each other with the second connector interposed therebetween.

The antenna fixing plate may be formed in the form of a quadrangle plate in which the snap groove is formed at each of four edge parts. The snap protrusion may be formed of a pair of snap protrusions formed in the pair of antenna coupling members, respectively.

A second alignment guide protrusion may be formed in any one of the antenna fixing plate and the antenna coupling member. A second alignment guide groove into which the second alignment guide protrusion is inserted may be formed in the other of the antenna fixing plate and the antenna coupling member.

The photoelectric composite unit may include a housing, a power board, and an optic board. The photoelectric terminal may be provided in the housing. The power board may be disposed within the housing. The power board may be connected to the first power terminal through a first power cable. The power board may be connected to the actuator through a second power cable. The optic board may be disposed within the housing. The optic board may be connected to the first signal terminal through a signal cable. The power board may supply the first power terminal, the actuator, and the optic board with a voltage of power that is input from the photoelectric terminal, by converting the voltage. The optic board may convert an optical signal that is received from the photoelectric terminal into an electrical signal, and may transmit the electrical signal to the first signal terminal. The optic board may convert an electrical signal that is received from the first signal terminal into an optical signal, and may transmit the optical signal to the photoelectric terminal.

The photoelectric composite unit may include a housing and a power board. A photoelectric terminal may be provided in the housing. The power board may be disposed within the housing. The power board may be connected to the first power terminal through a first power cable. The power board may be connected to the actuator through a second power cable. The power board may supply the first power terminal and the actuator with a voltage of power that is input from the photoelectric terminal, by converting the voltage. The photoelectric terminal and the first signal terminal may be connected through a signal cable, and may transmit and receive optical signals.

The power board may include a plurality of power boards that are stacked and connected.

A first tube connection pipe may be formed in the housing so that the first tube connection pipe protrudes therefrom. A second tube connection pipe may be formed in the first connector so that the second tube connection pipe protrudes therefrom. A cable tube may be connected to the first tube connection pipe and the second tube connection pipe. The signal cable and the first power cable may pass through the cable tube.

A cable guide pipe may be formed in the actuator so that the cable guide pipe protrudes therefrom. The second power cable may pass through the cable guide pipe. A guide pipe insertion hole into which the cable guide pipe is inserted may be formed in the housing.

The housing may include a housing main body and a housing cover. One side of the housing main body may be opened. The housing cover may cover the one side of the housing main body. A plurality of heat dissipation ribs may be formed in each of the outside of the housing main body and the outside of the housing cover.

The details of other embodiments are included in the detailed description and drawings.

### [Advantageous Effects]

The antenna apparatus according to an embodiment of the present disclosure has an effect in that it can improve a customer's maintenance ability because only a corresponding module can be replaced without a change in the state in which the integrated radio unit has been attached, by installing the power supply unit (PSU) and the small form-factor pluggable (SFP) in which problems occur most in a conventional integrated radio unit separately from the integrated radio unit.

Furthermore, the antenna apparatus according to an embodiment of the present disclosure also has an effect in that it may help a customer company to select a location at which a cable that comes from the ground is installed due to a visual environment-friendly effect because the cable is directly connected to an external module case.

Furthermore, the antenna apparatus according to an embodiment of the present disclosure also has effects in that it can reduce a weight and a volume because some modules are omitted from the main body of the integrated radio unit and it can thus increase the lifespan of the rotation tilt system (RTS), that is, an antenna installation unit.

Furthermore, the antenna apparatus according to an embodiment of the present disclosure also has an effect in that cooling efficiency is improved and a signal cable and a power cable can be tidily organized in the support pole because the photoelectric composite unit is installed in the antenna installation unit separately from the antenna.

Furthermore, the antenna apparatus according to an embodiment of the present disclosure also has an effect in that the photoelectric composite unit can be maintained without needing to separate the antenna from the antenna installation unit because the photoelectric composite unit is constructed separately from the antenna.

Effects of the present disclosure are not limited to the aforementioned effects, and the other effects not described above may be evidently understood by those skilled in the art from the claims.

### [Description of Drawings]

FIG. 1 is an exploded perspective view illustrating an antenna apparatus according to an embodiment of the present disclosure from the front side thereof.
FIG. 2 is an exploded perspective view illustrating the antenna apparatus according to an embodiment of the present disclosure from the rear side thereof.
FIG. 3 is a diagram illustrating a front part of an antenna installation unit illustrated in FIG. 1.
FIG. 4 is a diagram illustrating a rear part of the antenna illustrated in FIG. 2.
FIG. 5 is a perspective view in which the side of a front part of the antenna installation unit illustrated in FIG. 1 has been cut in forward and backward directions.
FIG. 6 is an exploded perspective view of a photoelectric composite unit illustrated in FIG. 1.
FIG. 7 is an exploded perspective view illustrating FIG. 6 from a lower side thereof.
FIG. 8 is a diagram illustrating another embodiment of a first signal terminal illustrated in FIG. 3.
FIG. 9 is a diagram illustrating another embodiment of a second signal terminal illustrated in FIG. 4.

**<Description of reference numerals>**

| | | | |
|---|---|---|---|
| 1: | antenna apparatus | 2: | support pole |
| 100: | antenna | 200: | antenna installation unit |
| 210: | support pole fixing clamp | 220: | antenna fixing bracket |
| 221: | antenna fixing plate | 221A, 221B, 221C, 221D: | snap groove |
| 221E, 221F: | second alignment guide protrusion | 222: | actuator coupling plate |
| 230: | actuator | 235: | cable guide pipe |
| 300: | photoelectric composite unit | 305: | photoelectric terminal |
| 310 : | housing | 311: | housing main body |
| 312: | housing cover | 313: | guide pipe insertion hole |
| 314, 315: | heat dissipation rib | 320: | power board |
| 330: | optic board | 380: | first tube connection pipe |
| 400: | first connector | 410: | first signal terminal |
| 420: | first power terminal | 430: | first terminal plate |
| 440: | gasket | 450: | first alignment guide protrusion |
| 460: | alignment cushion | 461: | cushion plate |
| 462: | cushion protrusion | 480: | second tube connection pipe |
| 500: | second connector | 510: | second signal terminal |
| 520: | second power terminal | 530: | second terminal plate |
| 540: | gasket insertion groove | 550: | first alignment guide groove |
| 610, 620: | antenna coupling member | 611, 612, 621,622: | snap protrusion |
| 615, 625: | second alignment guide groove | 700: | cable tube |

### [Best Mode]

Hereinafter, an antenna apparatus according to an embodiment of the present disclosure is described with reference to the drawings.

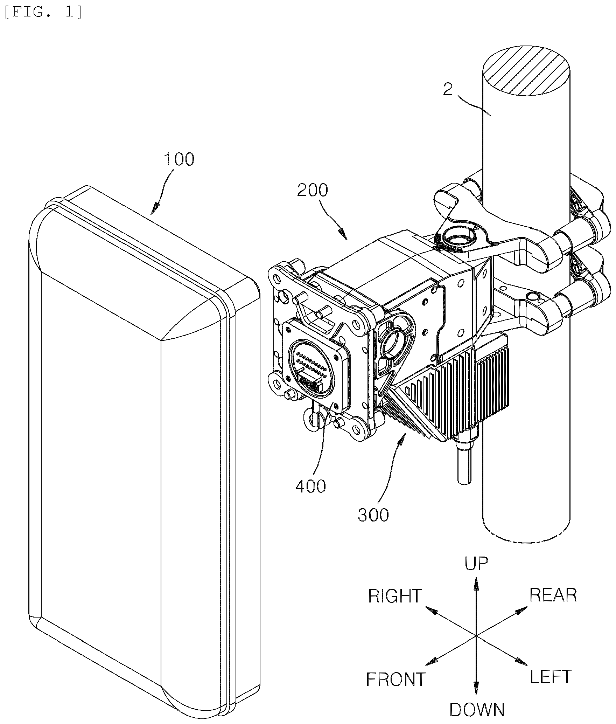

In the following description, terms related to directions, such as front, rear, up, down, left, and right, may be the same as front, rear, up, down, left, and right illustrated in FIG. 1. Furthermore, a vertical direction may be the same as an up and down direction, and a horizontal direction may be the same as a left and right direction.

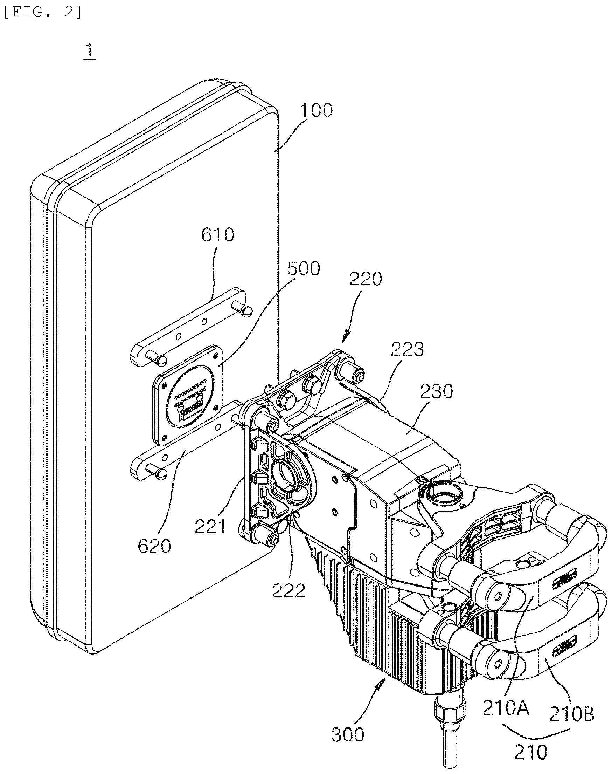

FIG. 1 is an exploded perspective view illustrating an antenna apparatus according to an embodiment of the present disclosure from the front side thereof. FIG. 2 is an exploded perspective view illustrating the antenna apparatus according to an embodiment of the present disclosure from the rear side thereof.

Referring to FIGS. 1 and 2, an antenna apparatus 1 according to an embodiment of the present disclosure may include an antenna (integrated radio unit) 100 and an antenna installation unit (rotation tilt system (RTS)) 200.

The antenna 100 may include an antenna housing having an approximately hexahedron. A printed circuit board on which at least one antenna element and at least one radio unit (RU) have been mounted may be included within the antenna housing. In this case, the antenna element may transmit and receive radio signals. The radio unit may process the radio signals. Furthermore, the antenna housing may be formed of a heat dissipation material, such as aluminum. Heat dissipation ribs for widening a contact area with a surrounding air may be formed on the outside of the antenna housing.

The antenna installation unit 200 may be an apparatus for installing the antenna 100 in a support pole 2. The antenna installation unit 200 may be installed so that the antenna 100 is disposed forward by being spaced apart from the support pole 2 by a predetermined distance. When the antenna 100 is in the state in which the antenna has been installed in the support pole 2 through the antenna installation unit 200, the antenna installation unit 200 may also adjust the direction of the antenna 100 by also rotating the antenna 100 in the vertical direction and the horizontal direction.

However, the antenna apparatus 1 according to an embodiment of the present disclosure is for providing advantages in that cooling efficiency is improved and a signal cable and a power cable can be tidily organized in the support pole by installing internal components of the antenna, which are related to the signal cable and the power cable connected to the outside of a conventional antenna, within a photoelectric composite unit 300 and installing the photoelectric composite unit 300 in the antenna installation unit 200 separately from the antenna 100. Accordingly, the antenna installation unit 200 does not need to necessarily have a function capable of adjusting the direction of the antenna 100, and may be sufficient if the antenna installation unit has a structure installed so that the antenna 100 is disposed in the support pole 2 forward by being spaced apart from the support pole by a predetermined distance.

A power supply unit (PSU) in which problems occur most after release in a conventional antenna may be constituted with the photoelectric composite unit 300. Furthermore, small form-factor pluggable (SFP) in which many problems occur may be constructed in the photoelectric composite unit 300 by considering a concern of a loss after digital conversion, and may not be constructed in the photoelectric composite unit 300 according to circumstances.

The support pole 2 may be formed of an RC bar. The support pole 2 is not limited to the RC bar, and may include all members each having a pole shape on an outer circumference surface of which the antenna 100 is installed through the antenna installation unit 200.

The antenna installation unit 200 may include a support pole fixing clamp 210, an antenna fixing bracket 220, and an actuator 230.

The support pole fixing clamp 210 may be disposed in a rear part of the actuator 230. The antenna fixing bracket 220 may be disposed in a front part of the actuator 230.

The support pole fixing clamp 210 may be installed in the support pole 2. The support pole fixing clamp 210 may be fixed to the support pole 210. The support pole fixing clamp 210 may be separably installed on an outer circumference surface of the support pole 2. When the support pole fixing clamp 210 is in the state in which the support pole fixing clamp has been installed in the support pole 2, the support pole fixing clamp may be disposed to protrude in the radial direction of the support pole 2. When the support pole fixing clamp 210 is in the state in which the support pole fixing clamp has been installed in the support pole 2, the support pole fixing clamp may be disposed to protrude toward the antenna 100 forward. The support pole fixing clamp 210 may be disposed to protrude in a direction that is opposite to a direction in which the antenna fixing bracket 220 protrudes. For example, the antenna fixing bracket 220 may be disposed on a rear surface of the antenna 100 so that the antenna fixing bracket protrudes backward. The support pole fixing clamp 210 may be disposed to protrude forward from the support pole 2.

A rear part of the support pole fixing clamp 210 may be separably fastened to the circumferential surface of the support pole 2. The rear part of the actuator 230 may be coupled to a front part of the support pole fixing clamp 210 rotatably in the horizontal direction.

The support pole fixing clamp 210 may be equipped with a pair of support pole fixing clamps 210A and 210B that are disposed to be spaced apart from each other up and down. That is, the pair of support pole fixing clamps 210A and 210B may include an upper support pole fixing clamp 210A and a lower support pole fixing clamp 210B. The upper support pole fixing clamp 210A may be disposed to be upward spaced apart from the lower support pole fixing clamp 210B. The lower support pole fixing clamp 210B may be disposed to be downward spaced apart from the upper support pole fixing clamp 210A.

The front part of the support pole fixing clamp 210 may be coupled to upper and lower surfaces of the rear part of the actuator 230 rotatably in the horizontal direction. That is, a rear part of the upper support pole fixing clamp 210A may be separably fastened to the circumferential surface of the support pole 2. A front part of the upper support pole fixing clamp 210A may be coupled to an upper surface of the rear part of the actuator 230 rotatably in the horizontal direction. Furthermore, a rear part of the lower support pole fixing clamp 210B may be separably fastened to the circumferential surface of the support pole 2. A front part of the lower support pole fixing clamp 210B may be coupled to the lower surface of the rear part of the actuator 230 rotatably in the horizontal direction.

The upper support pole fixing clamp 210A and the lower support pole fixing clamp 210B may be formed to have the same structure. The front part of the upper support pole fixing clamp 210A may be formed in a round shape in which the front part is convex forward. The front part of the lower support pole fixing clamp 210B may also be formed in a round shape in which the front part is also convex forward.

A front part of the antenna fixing bracket 220 may be coupled to the rear surface of the antenna 100. The front part of the actuator 230 may be rotatably coupled to a rear part of the antenna fixing bracket 220 in the vertical direction.

The antenna fixing bracket 220 may be installed in the antenna 100. The antenna fixing bracket 220 may be installed on the rear surface of the antenna 100. The antenna fixing bracket 220 may be fixed to the rear surface of the antenna 100. The antenna fixing bracket 220 may be connected to the antenna 100, and may support the antenna 100. When the antenna fixing bracket 220 is in the state in which the antenna fixing bracket has been installed in the antenna 100, the antenna fixing bracket may be disposed to protrude toward the support pole 2.

The antenna fixing bracket 220 may include an antenna fixing plate 221 and an actuator coupling plate 222 and 223.

The antenna fixing plate 221 may be coupled to the rear surface of the antenna 100. The antenna fixing plate 221 may be formed in a quadrangle plate form in which a front surface of the antenna fixing plate comes into contact with the rear surface of the antenna 100.

The actuator coupling plate 222 and 223 may be formed on a rear surface of the antenna fixing plate 221 so that the actuator coupling plate protrudes backward. A rear end of the actuator coupling plate 222 and 223 may be formed in a concave round shape. The actuator coupling plate 222 and 223 may be constituted with a pair of actuator coupling plates 222 and 223, may be rotatably coupled to both sides of the actuator 230 on the left and right sides thereof, respectively, in the vertical direction, and may be rotated in the vertical direction by a driving force of the actuator 230. A hole that extends in the left and right directions may be formed in rear end parts of the pair of actuator coupling plates 222 and 223. The hole formed in the rear end parts of the pair of actuator coupling plates 222 and 223 in a way to extend in the left and right directions may be a hole to be coupled to the rotation shaft of a decelerator that is disposed within the actuator 230.

The pair of actuator coupling plates 222 and 223 may include a left actuator coupling plate 222 that is rotatably coupled to the left of the actuator 230 and a right actuator coupling plate 223 that is rotatably coupled to the right of the actuator 230.

The actuator 230 may be one substantial apparatus for adjusting the vertical direction and horizontal direction of the antenna 100. That is, the actuator 230 may be formed in a way that a first motor and first decelerator for adjusting the vertical direction of the antenna 100 by rotating the antenna fixing bracket 220 in the vertical direction and a second motor and second decelerator for adjusting the horizontal direction of the antenna 100 by rotating the actuator 230 itself in the horizontal direction with respect to the support pole fixing clamp 210 are installed within one integrated housing.

The actuator 230 may connect the support pole fixing clamp 210 and the antenna fixing bracket 220. The actuator 230 may be rotatably coupled to the support pole fixing clamp 210 in the horizontal direction, and may be rotatable in the horizontal direction with respect to the support pole fixing clamp 210. As the antenna fixing bracket 220 is rotatably coupled to the actuator 230 in the vertical direction, the actuator may rotate the antenna fixing bracket 220 in the vertical direction.

That is, as the antenna fixing bracket 220 is rotatably coupled to the front part of the actuator 230 in the vertical direction, the actuator 230 may rotate the antenna fixing bracket 220 in the vertical direction. Furthermore, as the rear part of the actuator 230 is rotatably coupled to the support pole fixing clamp 210 in the horizontal direction, the actuator 230 may be rotated in the horizontal direction with respect to the support pole fixing clamp 210.

When the actuator 230 rotates the antenna fixing bracket 220 in the vertical direction, the vertical direction of the antenna 100 may be adjusted. Furthermore, when the actuator 230 is rotated in the horizontal direction with respect to the support pole fixing clamp 210, the horizontal direction of the antenna 100 may be adjusted.

The photoelectric composite unit 300 may be disposed in the antenna installation unit 200. The photoelectric composite unit 300 may be provided under the actuator 230. A worker can easily separate the photoelectric composite unit 300 from the actuator 230 and maintain the photoelectric composite unit upon maintenance.

The photoelectric composite unit 300 may satisfy waterproof/dustproof, and may be small formed in a heat sink shape in order to solve the generation of heat from a power supply unit (PSU).

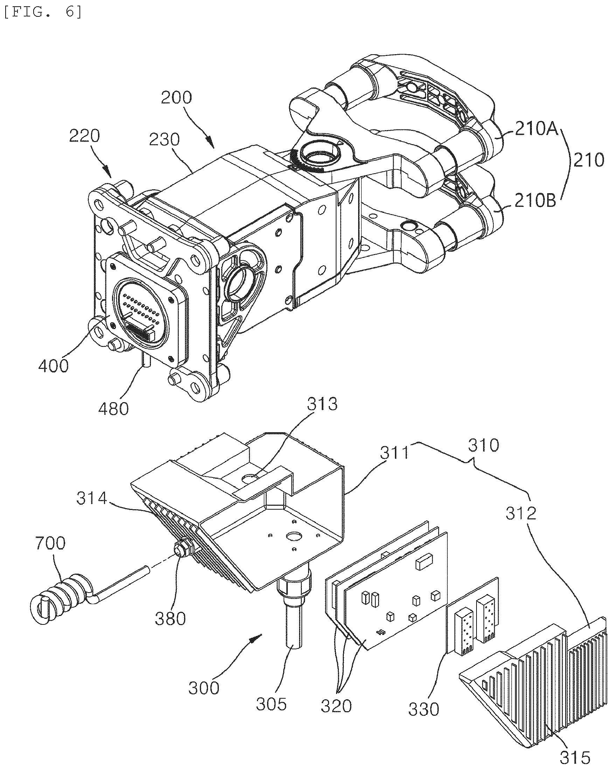

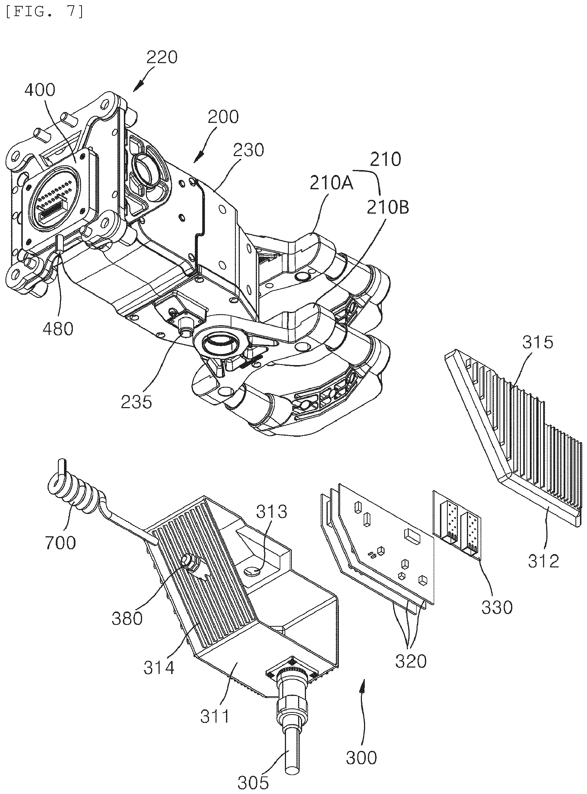

In the existing integrated radio unit, the photoelectric composite unit 300 may be formed by separating PSU and SFP parts. The SFP part may not be formed in the photoelectric composite unit 300. The PSU part may include a power board 320 (refer to FIGS. 6 and 7). The SFP part may include an optic board 330 (refer to FIGS. 6 and 7).

The power board 320 may be included within the photoelectric composite unit 300. The optic board 330 may be further included within the photoelectric composite unit 300 according to circumstances. The power board and the optic board are included within the antenna conventionally. In the present embodiment, however, cooling efficiency can be improved by constructing the photoelectric composite unit 300 that includes the power board 320 and the optic board 330 or that includes only the power board 320 separately from the antenna 10 and disposing the photoelectric composite unit in the antenna installation unit 200, and a signal cable and a power cable that are installed outside a conventional antenna can be tidily organized in the support pole 2 by disposing the signal cable and the power cable close to the support pole 2.

The photoelectric composite unit 300 may transmit and receive signals to and from the antenna 100, and may supply power to the antenna 100. Furthermore, the photoelectric composite unit 300 may supply power to the actuator 230 of the antenna installation unit 200 so that the antenna installation unit 200 can rotate the antenna 100 in the horizontal direction and the vertical direction.

However, a substantial object of the present disclosure is for facilitating maintenance by separating parts that requires much maintenance, among parts that are included in the existing antenna 100, from the antenna 100 and constructing the separated parts in the photoelectric composite unit 300. In order to achieve such an object, the antenna installation unit 200 does not need to essentially include the actuator 230. Accordingly, if the actuator 230 is not included in the antenna installation unit 200, the photoelectric composite unit 300 does not supply power to the antenna installation unit 200, and may transmit and receive signals to and from the antenna 100 and may supply power to the antenna 100.

The photoelectric composite unit 300 may convert power and an optical signal, and may connect the power and the optical signal through a cable that is connected to the body of the integrated radio unit.

A connection of the output cable of the photoelectric composite unit 300 and the integrated radio unit is constructed in a fixed surface of the RTS by using a blind mate method. A terminal using a contact method (POGO, a spring, etc.) is used for a common power and signal. A dedicated connector may be used for a part that requires high speed transmission. A ball clamp and a guide pin may be disposed for a stable connection and installation convenience of a blind mate part.

Specifically, a first connector 400 may be provided on a front surface of the antenna installation unit 200. The first connector 400 may be provided a front surface of the antenna fixing bracket 220. The first connector 400 may be provided on the front surface of the antenna fixing plate 221. Furthermore, a second connector 500 may be provided on the rear surface of the antenna 100. When the antenna 100 is in the state in which the antenna has been coupled to the antenna installation unit 200, the first connector 400 may be connected to the second connector 500, may transmit the signal of the photoelectric composite unit 300 to the antenna 100 or transmit the signal of the antenna 100 to the photoelectric composite unit 300, and may supply power of the photoelectric composite unit 300 to the antenna 100.

The first connector 400 may be formed on the front surface of the antenna installation unit 200 in a rectangular plate shape so that the first connector protrudes therefrom. The first connector 400 may be formed on the front surface of the antenna fixing bracket 220 in a rectangular plate shape so that the first connector protrudes therefrom. The second connector 500 may be formed on the rear surface of the antenna 100 in a rectangular plate shape so that the second connector protrudes therefrom.

Meanwhile, an antenna coupling member 610 and 620 may be installed on the rear surface of the antenna 100. The antenna coupling member 610 and 620 may be coupled to the antenna fixing plate 221, and may couple the antenna 100 to the front surface of the antenna installation unit 200.

The antenna coupling member 610 and 620 may include a pair of antenna coupling members 610 and 620. The pair of antenna coupling members 610 and 620 may be disposed to be spaced apart from each other with the second connector 500 interposed therebetween. In the present embodiment, the pair of antenna coupling members 610 and 620 includes a first antenna coupling member 610 that is disposed above the second connector 500 and a second antenna coupling member 620 that is disposed below the second connector 500, but the first antenna coupling member 610 may be disposed on the left side of the second connector 500 and the second antenna coupling member 620 may be disposed on the right side of the second connector 500.

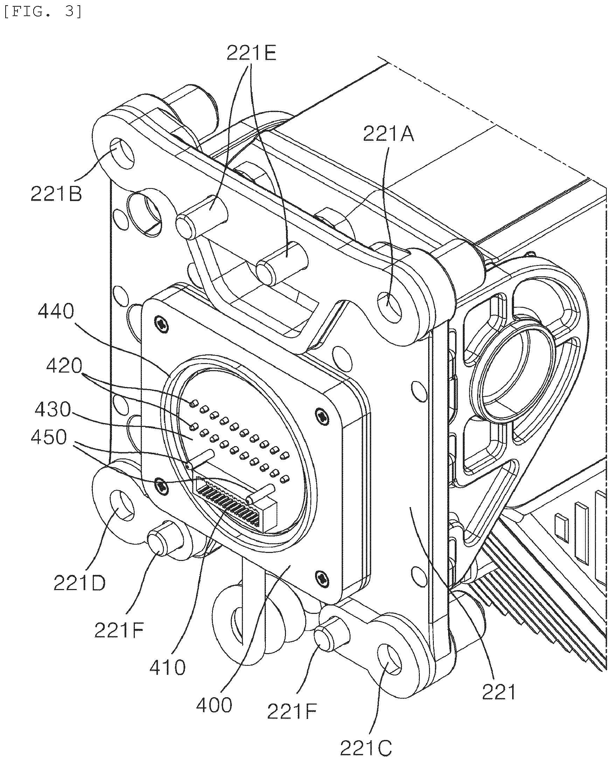

Detailed structures of the first connector 400 and the second connector 500 and detailed coupling relations of the pair of antenna coupling members 610 and 620 and the antenna fixing plate 221 are described below with reference to FIGS. 3 to 5.

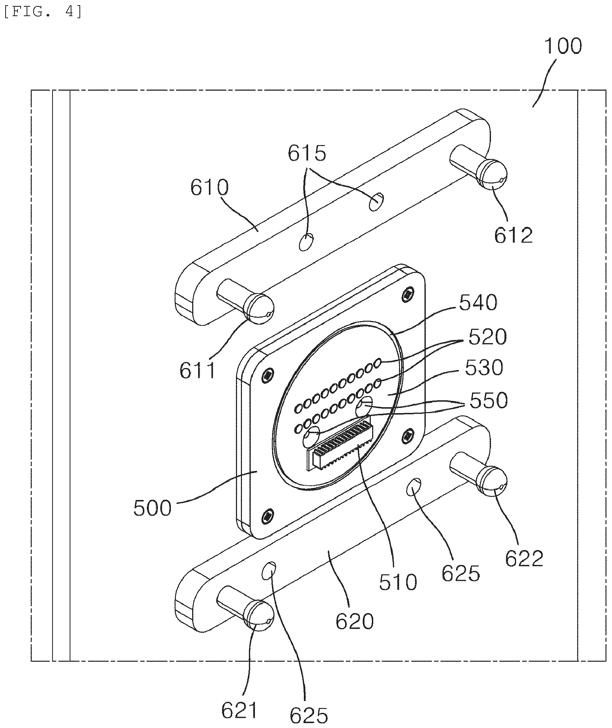

FIG. 3 is a diagram illustrating a front part of the antenna installation unit illustrated in FIG. 1. FIG. 4 is a diagram illustrating a rear part of the antenna illustrated in FIG. 2.

Referring to FIGS. 3 and 4, the first connector 400 may include a first signal terminal 410 and a first power terminal 420. The first signal terminal 410 and the first power terminal 420 may be connected to the photoelectric composite unit 300.

The second connector 500 may include a second signal terminal 510 and a second power terminal 520. The second signal terminal 510 may be connected to the first signal terminal 410. The second power terminal 520 may be connected to the first power terminal 420.

When the antenna 100 is in the state in which the antenna has been coupled to the antenna fixing plate 221 of the antenna installation unit 200 and thus the first signal terminal 410 and the second signal terminal 510 have been connected and the first power terminal 420 and the second power terminal 520 have been connected, the signal of the photoelectric composite unit 300 may be transmitted to the antenna 100 through the first signal terminal 410 and the second signal terminal 510, the signal of the antenna 100 may be transmitted to the photoelectric composite unit 300 through the second signal terminal 510 and the first signal terminal 410, and power of the photoelectric composite unit 300 may be supplied to the antenna 100 through the first power terminal 420 and the second power terminal 520.

The first signal terminal 410 may be formed of a female connector. The second signal terminal 510 may be formed of a male connector that is inserted into the first signal terminal 410. However, the locations at which the first signal terminal 410 and the second signal terminal 510 are installed may be exchanged.

The first power terminal 420 may be formed to protrude in the form of a plurality of pins that are arranged in two columns up and down. The second power terminal 520 may be formed in the form of a plurality of grooves that are arranged in two columns up and down and into which the first power terminal 420 is inserted. However, the locations at which the first power terminal 420 and the second power terminal 520 are installed may be exchanged.

A first terminal plate 430 and a gasket 440 may be formed on a front surface of the first connector 400. The first terminal plate 430 may be formed in a disc form. The gasket 440 may be formed in the form of a ring that surrounds the circumference of the first terminal plate 430. The first signal terminal 410 and the first power terminal 420 may be provided in the first terminal plate 430. The gasket 440 may surround the first terminal plate 430.

A second terminal plate 530 and a gasket insertion groove 540 may be formed on a rear surface of the second connector 500. The second terminal plate 530 may be formed in a disc form. The gasket insertion groove 540 may be formed in the form of a ring that surrounds the circumference of the second terminal plate 530. The second signal terminal 510 and the second power terminal 520 may be provided in the second terminal plate 530. The gasket insertion groove 540 may surround the second terminal plate 530. When the antenna 100 is in the state in which the antenna has been coupled to the antenna fixing plate 221 of the antenna installation unit 200, the gasket 440 may be inserted into the gasket insertion groove 540.

A first alignment guide protrusion 450 may be formed in the first terminal plate 430. A first alignment guide groove 550 into which the first alignment guide protrusion 450 is inserted may be formed in the second terminal plate 530. However, the location at which the first alignment guide protrusion 450 and the first alignment guide groove 550 are formed may be exchanged. That is, the first alignment guide protrusion 450 may be provided in any one terminal plate (e.g., 430) of the first terminal plate 430 and the second terminal plate 530. The first alignment guide groove 550 into which the first alignment guide protrusion 450 is inserted may be formed in the other terminal plate (e.g., 530) of the first terminal plate and the second terminal plate.

When the antenna 100 is coupled to the antenna fixing plate 221 of the antenna installation unit 200, the first alignment guide protrusion 450 may be inserted into the first alignment guide groove 550, so the first signal terminal 410 and the second signal terminal 510 may be aligned so that the first signal terminal and the second signal terminal are connected at their regular positions and the first power terminal 420 and the second power terminal 520 may be aligned so that the first power terminal and the second power terminal are connected at their regular positions.

The first alignment guide protrusion 450 may be formed of a pair of first alignment guide protrusions 450 that are disposed to be spaced apart from each other in the left and right directions. The first alignment guide groove 550 may be formed of a pair of first alignment guide grooves 550 that are disposed to be spaced apart from each other in the left and right directions. In this case, the direction in which the pair of first alignment guide protrusions 450 has been spaced apart from each other and the direction in which the pair of first alignment guide grooves 550 has been spaced apart from each other do not need to be essentially the left and right directions.

Meanwhile, the antenna coupling member 610 and 620 that is installed on the rear surface of the antenna 100 may be easily coupled to the antenna fixing plate 221 of the antenna installation unit 200 in a snap way. That is, a snap protrusion 611, 612, 621, and 622 may be formed in the antenna coupling member 610 and 620. A snap groove 221A, 221B, 221C, and 221D may be formed in the antenna fixing plate 221 of the antenna installation unit 200. The snap protrusion 611, 612, 621, and 622 is inserted, snapped, and coupled to the snap groove 221A, 221B, 221C, and 221D, so the antenna 100 can be easily coupled to the antenna fixing plate 221 of the antenna installation unit 200.

A ball part may be formed at the front end of the snap protrusion 611, 612, 621, and 622. The snap protrusion may be cut forward from the ball part, and thus may have a self-elastic force by which the snap protrusion can be snapped and coupled within the snap groove 221A, 221B, 221C, and 221D.

The antenna fixing plate 221 may be formed in a quadrangle plate form. The snap groove 221A, 221B, 221C, and 221D may be formed at each of four edge parts of the antenna fixing plate. The snap groove 221A, 221B, 221C, and 221D may include a first snap groove 221A at a left part of the antenna fixing plate 221 at the top thereof, a second snap groove 221B at a right part of the antenna fixing plate 221 at the top thereof, a third snap groove 221C at the left part of the antenna fixing plate 221 at the bottom thereof, and a fourth snap groove 221D at the right part of the antenna fixing plate 221 at the bottom thereof.

The snap protrusion 611, 612, 621, and 622 may be formed of a pair of snap protrusions 611, 612, 621, and 622 in each of the pair of antenna coupling members 610 and 620. That is, the snap protrusion 611, 612, 621, and 622 may include a first snap protrusion 611 and a second snap protrusion 612 that are formed in the first antenna coupling member 610 and a third snap protrusion 621 and a fourth snap protrusion 622 that are formed in the second antenna coupling member 620.

The first snap protrusion 611 may be inserted, snapped, and coupled to the first snap groove 221A. The second snap protrusion 612 may be inserted, snapped, and coupled to the second snap groove 221B. The third snap protrusion 621 may be inserted, snapped, and coupled to the third snap groove 221C. The fourth snap protrusion 622 may be inserted, snapped, and coupled to the fourth snap groove 221D.

Meanwhile, a second alignment guide protrusion 221E and 221F may be formed in the antenna fixing plate 221. A second alignment guide groove 615 and 625 into which the second alignment guide protrusion 221E and 221F is inserted may be formed in the antenna coupling member 610 and 620. However, the locations at which the second alignment guide protrusion 221E and 221F and the second alignment guide groove 615 and 625 are formed may be exchanged. That is, the second alignment guide protrusion 221E and 221F may be formed in any one (e.g., 221) of the antenna fixing plate 221 and the antenna coupling member 610 and 620. The second alignment guide groove 615 and 625 into which the second alignment guide protrusion 221E and 221F is inserted may be formed in the other (e.g., 610, 620) of the antenna fixing plate 221 and the antenna coupling member 610 and 620.

When the antenna 100 is coupled to the antenna fixing plate 221 of the antenna installation unit 200, the second alignment guide protrusion 221E and 221F may be inserted into the second alignment guide groove 615 and 625, so the snap protrusion 611, 612, 621, and 622 and the snap groove 221A, 221B, 221C, and 221D may be aligned so that the snap protrusion and the snap groove are connected at their regular positions.

The second alignment guide protrusion 221E and 221F may include a pair of (2-1)-th alignment guide protrusions 221E that are disposed on an upper side of the antenna fixing plate 221 by being spaced apart from each other in the left and right directions and a pair of (2-2)-th alignment guide protrusions 221F that are disposed on a lower side of the antenna fixing plate 221 by being spaced apart from each other in the left and right directions. The pair of (2-1)-th alignment guide protrusions 221E may be disposed between the first snap groove 221A and the second snap groove 221B. The pair of (2-2)-th alignment guide protrusions 221F may be disposed between the third snap groove 221C and the fourth snap groove 221D.

The second alignment guide groove 615 and 625 may include a pair of (2-1)-th alignment guide grooves 615 that are disposed in the first antenna coupling member 610 by being spaced apart from each other in the left and right directions and a pair of (2-2)-th alignment guide grooves 625 that are disposed in the second antenna coupling member 620 by being spaced apart from each other in the left and right directions. The pair of (2-1)-th alignment guide grooves 615 may be disposed between the first snap protrusion 611 and the second snap protrusion 612. The pair of (2-2)-th alignment guide grooves 625 may be disposed between the third snap protrusion 621 and the fourth snap protrusion 622.

When the antenna 100 is coupled to the antenna fixing plate 221 of the antenna installation unit 200, the pair of (2-1)-th alignment guide protrusions 221E may be inserted into the pair of (2-1)-th alignment guide grooves 615, respectively, so the first snap protrusion 611 and the first snap groove 221A may be aligned so that the first snap protrusion and the first snap groove are connected at their regular positions and the second snap protrusion 612 and the second snap groove 221B may be aligned so the second snap protrusion and the second snap are connected at their regular positions. Furthermore, when the antenna 100 is coupled to the antenna fixing plate 221 of the antenna installation unit 200, the pair of (2-2)-th alignment guide protrusions 221F may be inserted into the pair of (2-2)-th alignment guide grooves 625, respectively, so the third snap protrusion 621 and the third snap groove 221C may be aligned so that the third snap protrusion and the third snap groove are connected at their regular positions and the fourth snap protrusion 622 and the fourth snap groove 221D may be aligned so that the fourth snap protrusion and the fourth snap groove are connected at their regular positions.

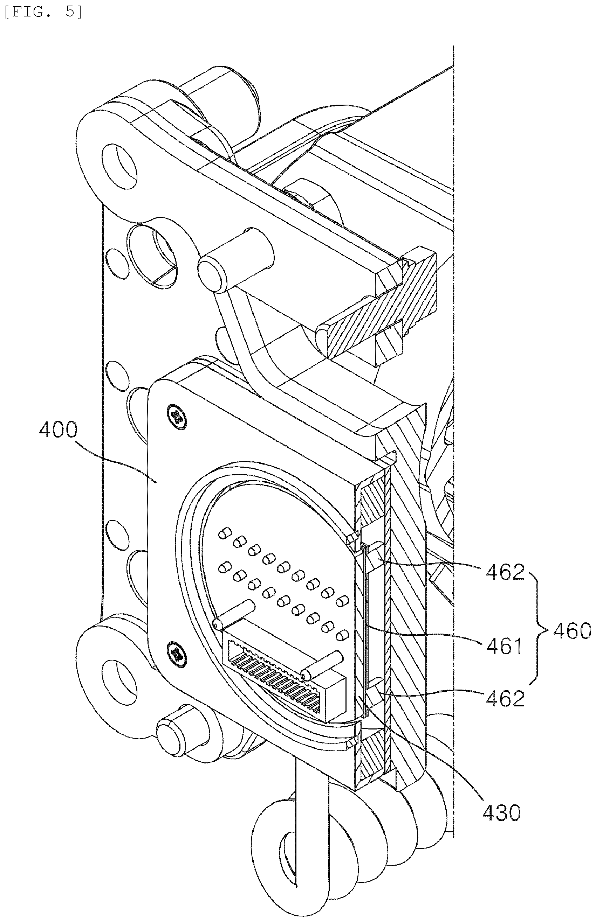

FIG. 5 is a perspective view in which the side of the front part of the antenna installation unit illustrated in FIG. 1 has been cut in forward and backward directions.

Referring to FIG. 5, the first terminal plate 430 of the first connector 400 may be movable in the forward and backward directions. An alignment cushion 460 that provides an elastic force in the forward and backward directions may be further installed on a rear part of the first terminal plate 430. However, the second terminal plate 530 of the second connector 500 may be movable in the forward and backward directions instead of the first terminal plate 430. In this case, the alignment cushion 460 may be installed on a front surface of the second terminal plate 530. That is, any one terminal plate (e.g., 430) of the first terminal plate 430 and the second terminal plate 530 may be movable in the forward and backward directions. In this case, the alignment cushion 460 that provides an elastic force in the forward and backward directions may be installed in the any one terminal plate 430.

The first terminal plate 430 may be moved backward by a force that is generated when the first signal terminal 410 and the second signal terminal 510 are connected and the first power terminal 420 and the second power terminal 520 are connected. At this time, the alignment cushion 460 may elastically support the first terminal plate 430, so the first signal terminal 410 and the second signal terminal 510 may be aligned so that the first signal terminal and the second signal terminal are connected at their regular positions and the first power terminal 420 and the second power terminal 520 may be aligned so that the first power terminal and the second power terminal are connected at their regular positions.

The alignment cushion 460 may be formed of rubber. However, the alignment cushion 460 may be formed of a spring if the alignment cushion has a structure capable of providing an elastic force to the first terminal plate 430. The alignment cushion 460 may include a cushion plate 461 and a plurality of cushion protrusions 462. A front surface of the cushion plate 461 may be disposed to come into contact with the front surface of the first terminal plate 430. The plurality of cushion protrusions 462 may be formed on a rear surface of the cushion plate 461. FIG. 5 illustrates that the plurality of cushion protrusions 462 is formed to include two cushion protrusions in the rear surface of the cushion plate 461, but may be formed to include four cushion protrusions.

Meanwhile, a detailed structure of the photoelectric composite unit 300 is described below with reference to FIGS. 6 and 7.

FIG. 6 is an exploded perspective view of the photoelectric composite unit illustrated in FIG. 1. FIG. 7 is an exploded perspective view illustrating FIG. 6 from a lower side thereof.

Referring to FIGS. 6 and 7, the photoelectric composite unit 300 may include a housing 310, the power board 320, and the optic board 330.

The housing 310 may form an exterior form of the photoelectric composite unit 300. The housing 310 may be formed of a material having an excellent heat dissipation property, and may be formed of an aluminum material, for example. A plurality of heat dissipation ribs 314 and 315 may be formed in the outside of the housing 310 in all directions thereof so that the plurality of heat dissipation ribs protrudes therefrom. The heat dissipation ribs 314 and 315 may widen a contact area with the air so that heat that is generated from heating elements mounted on the power board 320 and the optic board 330 disposed within the housing 310 can be easily discharged to the outside of the housing 310.

The housing 310 may include a housing main body 311 and a housing cover 312. The left side of the housing main body 311 may be opened. The housing cover 312 may cover the opened left side of the housing main body 311. The plurality of first heat dissipation ribs 314 may be formed in a front surface, rear surface, and right side of the outside of the housing main body 311, respectively. The plurality of second heat dissipation ribs 315 may be formed on a right side, that is, the outside of the housing cover 312.

A photoelectric terminal 305 may be provided in the housing 310. The photoelectric terminal 305 may be provided under the housing 310. Specifically, the photoelectric terminal may be provided under the housing main body 311. The photoelectric terminal 305 may be a terminal in which the optical signal cable and the power cable have been integrated. However, the photoelectric terminal 305 may be provided as a pair so that the optical signal cable and the power cable are not integrated.

The power board 320 may be disposed within the housing 310. In order to reduce the size of the housing 310, the power board 320 may include a plurality of power boards 320. In the present embodiment, the power board 320 may include three power boards 320. The plurality of power boards 320 may be stacked and connected through a pin.

The power board 320may be connected to the first power terminal 420 of the first connector 400 through the first power cable (not illustrated). The power board 320 may be connected to the actuator 230 of the antenna installation unit 200 through the second power cable (not illustrated). The power board 320 may supply the first power terminal 420, the actuator 230, and the optic board 330 with a voltage of power that is input from the photoelectric terminal 305, by converting the voltage.

The optic board 330 may be disposed within the housing 310. The optic board 330 may be connected to the first signal terminal 410 of the first connector 400 through a signal cable (not illustrated). The optic board 330 may convert, into an electrical signal, an optical signal that is received from the photoelectric terminal 305, and may transmit the electrical signal to the first signal terminal 410 of the first connector 400 so that the electrical signal is transmitted to the antenna 100. Furthermore, the optic board 330 may convert an electrical signal of the antenna 100, which is received from the first signal terminal 410, into an optical signal, and may transmit the optical signal to the photoelectric terminal 305.

A first tube connection pipe 380 may be formed in the housing 310 so that the first tube connection pipe protrudes therefrom. The first tube connection pipe 380 may be formed in a front surface of the housing 310 so that the first tube connection pipe protrudes therefrom. Specifically, the first tube connection pipe may be formed in a front surface of the housing main body 311 so that the first tube connection pipe protrudes therefrom. Furthermore, a second tube connection pipe 480 may be formed in the first connector 400 so that the second tube connection pipe protrudes therefrom. The second tube connection pipe 480 may be formed under the first connector 400 so that the second tube connection pipe protrudes therefrom. A cable tube 700 may be connected to the first tube connection pipe 380 and the second tube connection pipe 480. The signal cable and the first power cable may pass through the cable tube 700. The cable tube 700 may have a coil forming part formed therein so that the cable tube does not droop by the signal cable and the first power cable.

A cable guide pipe 235 may be formed in the actuator 230 of the antenna installation unit 200 so that the cable guide pipe protrudes therefrom. The cable guide pipe 235 may be formed under the actuator 230 so that the cable guide pipe protrudes therefrom. The second power cable may pass through the cable guide pipe 235. A guide pipe insertion hole 313 into which the cable guide pipe 235 is inserted may be formed in the housing 310. The guide pipe insertion hole 313 may be formed at the top of the housing 310. Specifically, the guide pipe insertion hole may be formed at the top of the housing main body 311.

Meanwhile, the optic board 330 may not be constructed in the photoelectric composite unit 300. In this case, the photoelectric terminal 305 and the first signal terminal 410 may be directly connected through a signal cable, and may transmit and receive optical signals. That is, after an optical signal that is received through the photoelectric terminal 305 is transmitted to the first signal terminal 410 through the signal cable, the optical signal may be transmitted to the antenna 100 through the second signal terminal 510. An optical signal that is transmitted from the antenna 100 to the first signal terminal 410 through the second signal terminal 510 may be transmitted to the photoelectric terminal 305 through the signal cable.

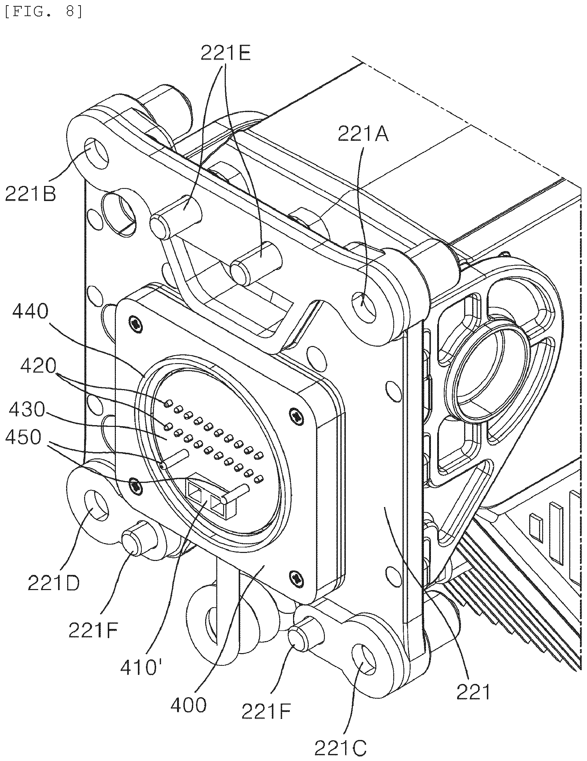

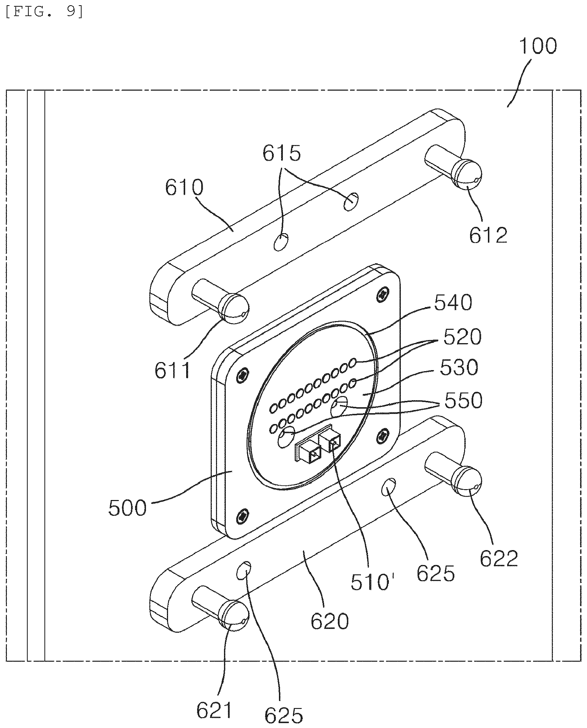

If the optic board 330 is not included in the photoelectric composite unit 300 as described above, the first signal terminal 410 and the second signal terminal 420 may be implemented to be changed into a terminal capable of transmitting and receiving optical signals. This is described further with reference to FIGS. 8 and 9.

FIG. 8 is a diagram illustrating another embodiment of the first signal terminal illustrated in FIG. 3. FIG. 9 is a diagram illustrating another embodiment of the second signal terminal illustrated in FIG. 4.

Referring to FIGS. 3 and 4 and 7 to 9, if the optic board 330 illustrated in FIG. 7 is not included in the photoelectric composite unit 300, the first signal terminal 410 illustrated in FIG. 3 may be provided as a first signal terminal 410' illustrated in FIG. 8, and the second signal terminal 510 illustrated in FIG. 4 may be provided as a second signal terminal 510' illustrated in FIG. 9. In this case, the first signal terminal 410 and the second signal terminal 510 may each be a photoelectric signal terminal, and the first signal terminal 410' and the second signal terminal 510' may each be an optical signal terminal.

As described above, in the antenna apparatus 1 according to an embodiment of the present disclosure, cooling efficiency can be improved and the signal cable and the power cable can also be tidily organized in the support pole, because the photoelectric composite unit 300 is installed in the antenna installation unit 200 separately from the antenna 100.

Furthermore, in the antenna apparatus 1 according to an embodiment of the present disclosure, the photoelectric composite unit 300 can be maintained without needing to separate the antenna 100 from the antenna installation unit 200 because the photoelectric composite unit 300 is constructed separately from the antenna 100.

A person having ordinary knowledge in the art to which the present disclosure pertains will understand that the present disclosure may be implemented in other detailed forms without changing the technical spirit or essential characteristics of the present disclosure. Accordingly, the aforementioned embodiments should be construed as being only illustrative, but should not be construed as being restrictive from all aspects. The scope of the present disclosure is defined by the appended claims rather than by the detailed description, and all changes or modifications derived from the meanings and scope of the claims and equivalent concepts thereof should be interpreted as being included in the scope of the present disclosure.

### [Industrial Applicability]

The present disclosure provides the antenna apparatus, which can improve cooling efficiency and in which the signal cable and the power cable can be tidily organized in the support pole, because internal components of a conventional antenna related to the signal cable and the power cable that are connected to the outside of the antenna are installed separately from the antenna, and in which components related to the signal cable and the power cable can be easily maintained even without separating the antenna when the components are maintained.

## Claims

1. An antenna apparatus comprising:
an antenna;
an antenna installation unit configured to install the antenna in a support pole so that the antenna is disposed to be spaced apart from the support pole forward by a predetermined distance; and
a photoelectric composite unit disposed in the antenna installation unit and configured to transmit and receive signals to and from the antenna and to supply power to the antenna.

2. The antenna apparatus according to claim 1, wherein:
a first connector comprising a first signal terminal and a first power terminal that are connected to the photoelectric composite unit is provided on a front surface of the antenna installation unit, and
a second connector comprising a second signal terminal that is connected to the first signal terminal and a second power terminal that is connected to the first power terminal is provided on a rear surface of the antenna.

3. The antenna apparatus according to claim 2, wherein:
a first terminal plate comprising the first signal terminal and the first power terminal and a gasket surrounding the first terminal plate are formed on a front surface of the first connector, and
a second terminal plate comprising the second signal terminal and the second power terminal and a gasket insertion groove that surrounds the second terminal plate and into which the gasket is inserted are formed on a rear surface of the second connector.

4. The antenna apparatus according to claim 3, wherein:
a first alignment guide protrusion is further provided in any one terminal plate of the first terminal plate and the second terminal plate, and
a first alignment guide groove into which the first alignment guide protrusion is inserted is further provided in the other terminal plate of the first terminal plate and the second terminal plate.

5. The antenna apparatus according to claim 3, wherein:
any one terminal plate of the first terminal plate and the second terminal plate is movable in forward and backward directions, and
the any one terminal plate further comprises an alignment cushion that provides an elastic force in the forward and backward directions.

6. The antenna apparatus according to claim 5, wherein the alignment cushion comprises:
a cushion plate having one side disposed to come into contact with one side of the any one terminal plate; and
a plurality of cushion protrusions formed in the other side of the cushion plate.

7. The antenna apparatus according to claim 1, wherein:
the antenna installation unit rotates the antenna in a horizontal direction and a vertical direction, and
the photoelectric composite unit supplies power to the antenna installation unit.

8. The antenna apparatus according to claim 2, wherein the antenna installation unit comprises:
a support pole fixing clamp fixed to the support pole;
an antenna fixing bracket fixed to the rear surface of the antenna, and
an actuator that is coupled to the support pole fixing clamp rotatably in a horizontal direction and that is rotatable in the horizontal direction with respect to the support pole fixing clamp, and to which the antenna fixing bracket is coupled to be rotatable in a vertical direction and that rotates the antenna fixing bracket in the vertical direction,
wherein the first connector is provided on a front surface of the antenna fixing bracket.

9. The antenna apparatus according to claim 8, wherein the photoelectric composite unit is provided under the actuator.

10. The antenna apparatus according to claim 8, wherein the antenna fixing bracket comprises:
an antenna fixing plate having the first connector provided on a front surface thereof; and
a pair of actuator coupling plates formed on a rear surface of the antenna fixing plate so that the pair of actuator coupling plates protrudes backward and coupled to both sides of the actuator, respectively, rotatably in the vertical direction.

11. The antenna apparatus according to claim 10, further comprising an antenna coupling member that is installed on the rear surface of the antenna and in which a snap protrusion inserted, snapped, and coupled to a snap groove formed in the antenna fixing plate is formed.

12. The antenna apparatus according to claim 11, wherein the antenna coupling member comprises a pair of antenna coupling members disposed to be spaced apart from each other with the second connector interposed therebetween.

13. The antenna apparatus according to claim 12, wherein:
the antenna fixing plate is formed in a form of a quadrangle plate in which the snap groove is formed at each of four edge parts, and
the snap protrusion comprises a pair of snap protrusions formed in the pair of antenna coupling members, respectively.

14. The antenna apparatus according to claim 11, wherein:
a second alignment guide protrusion is formed in any one of the antenna fixing plate and the antenna coupling member, and
a second alignment guide groove into which the second alignment guide protrusion is inserted is formed in the other of the antenna fixing plate and the antenna coupling member.

15. The antenna apparatus according to claim 8, wherein the photoelectric composite unit comprises:
a housing comprising the photoelectric terminal;
a power board disposed within the housing, connected to the first power terminal through a first power cable, and connected to the actuator through a second power cable; and
an optic board disposed within the housing and connected to the first signal terminal through a signal cable,
wherein the power board supplies the first power terminal, the actuator, and the optic board with a voltage of power that is input from the photoelectric terminal, by converting the voltage, and
the optic board converts an optical signal that is received from the photoelectric terminal into an electrical signal and transmits the electrical signal to the first signal terminal, and converts an electrical signal that is received from the first signal terminal into an optical signal and transmits the optical signal to the photoelectric terminal.

16. The antenna apparatus according to claim 8, wherein the photoelectric composite unit comprises:
a housing comprising the photoelectric terminal; and
a power board disposed within the housing, connected to the first power terminal through a first power cable, and connected to the actuator through a second power cable,
wherein the power board supplies the first power terminal and the actuator with a voltage of power that is input from the photoelectric terminal, by converting the voltage, and
the photoelectric terminal and the first signal terminal are connected through a signal cable and transmit and receive optical signals.

17. The antenna apparatus according to claim 15 or 16, wherein the power board comprises a plurality of power boards that are stacked and connected.

18. The antenna apparatus according to claim 15 or 16, wherein:
a first tube connection pipe is formed in the housing so that the first tube connection pipe protrudes therefrom,
a second tube connection pipe is formed in the first connector so that the second tube connection pipe protrudes therefrom, and
the antenna apparatus further comprises a cable tube that is connected to the first tube connection pipe and the second tube connection pipe and through which the signal cable and the first power cable pass.

19. The antenna apparatus according to claim 15 or 16, wherein:
a cable guide pipe through which the second power cable passes is formed in the actuator so that the cable guide pipe protrudes therefrom, and
a guide pipe insertion hole into which the cable guide pipe is inserted is formed in the housing.

20. The antenna apparatus according to claim 15 or 16, wherein the housing comprises:
a housing main body having one side opened; and
a housing cover configured to cover the one side of the housing main body,
wherein a plurality of heat dissipation ribs is formed in each of an outside of the housing main body and an outside of the housing cover.
